# EUROPÄISCHE PATENTSCHRIFT

(11) **EP 3 864 731 B1**
(45) Veröffentlichungstag und Bekanntmachung des Hinweises auf die Patenterteilung: **20.03.2024**
(21) Anmeldenummer: 19769988.7
(22) Anmeldetag: 12.09.2019
(51) Int. Cl.: H02P 1/02, H02P 3/04, H02P 29/04

(54) **VERFAHREN ZUM ÜBERWACHEN DES BETRIEBS EINES ELEKTROMOTORS**
METHOD FOR MONITORING THE OPERATION OF AN ELECTRIC MOTOR
PROCÉDÉ POUR LE CONTRÔLE DU FONCTIONNEMENT D'UN MOTEUR ÉLECTRIQUE

(30) Priorität: 12.10.2018 DE 102018008070
(43) Veröffentlichungstag der Anmeldung: 18.08.2021
(73) Patentinhaber: SEW-EURODRIVE GmbH & Co. KG, 76646 Bruchsal (DE)
(72) Erfinder: SCHUSTER, Thomas, 73113 Ottenbach (DE); BECKER, Robert, 76684 Östringen/Odenheim (DE)
(86) Internationale Anmeldenummer: PCT/EP2019/025306
(87) Internationale Veröffentlichungsnummer: WO 2020/074116

(56) Entgegenhaltungen:
- WO-A1-2011/116488
- DE-A1- 19 713 471
- JP-A- 2007 137 621

## Beschreibung

Die Erfindung betrifft ein Verfahren zum Überwachen des Betriebs eines Elektromotors und ein Hubwerk.

Es ist allgemein bekannt, dass ein Hubwerk, wie beispielsweise Lift, von einem Antrieb antreibbar ist, bei dessen Ausfall das Risiko eines Absturzes der angehobenen Last besteht.

**Aus der** DE 10 2018 002 188 A1**, insbesondere aus dem dortigen Absatz [0035] ist ein Verfahren zum Prüfen eines Antriebs bekannt. Dabei werden Widerstände der Statorwicklung eines Elektromotors bestimmt, indem Motorspannung und Motorstrom gemessen werden, wofür allerdings der nach Anlegen der Motorspannung der sich stationär einstellende Motorstrom abgewartet wird, damit die Wirkungen der StatorInduktivität vernachlässigbar sind.**

**Aus der** DE 42 28 798 C2 **ist eine Vorrichtung zum Üben der Fehlersuche an elektrischen Maschinen bekannt.**

**Aus der** JP 2007 137 621 A **ist als nächstliegender Stand der Technik ein Hubwerk** mit Haltebremse **bekannt.**

**Aus der** WO 2011/116488 A1 **ist ein Verfahren zum Unterdrücken von Einschaltstrom eines Transformators bekannt.**

**Aus der** DE 197 13 471 A1 **ist eine Prüfvorrichtung bekannt.**

Der Erfindung liegt daher die Aufgabe zugrunde, ein Verfahren zum Überwachen des Betriebs eines Hubwerks weiterzubilden, wobei die Sicherheit erhöht sein soll, insbesondere auch bei der Erstinbetriebnahme.

Erfindungsgemäß wird die Aufgabe bei dem Verfahren nach den in Anspruch 1 angegebenen Merkmalen gelöst.

Wichtige Merkmale der Erfindung bei dem Verfahren zum Überwachen des Betriebs eines Elektromotors, insbesondere eines als Asynchronmotor ausgeführten Elektromotors, sind, dass der Motorstrom erfasst wird,

wobei der Elektromotor eine insbesondere elektromagnetisch betätigbare Bremse, insbesondere Haltebremse, aufweist, insbesondere wobei das von der Bremse erzeugte Bremsmoment dem Rotor des Elektromotors zugeleitet wird,

wobei in einem ersten Verfahrensschritt beim Einschalten des Elektromotors eine Vormagnetisierung durchgeführt wird, **wobei, insbesondere während dieser Vormagnetisierung,** der Verlauf der erfassten Werte des Motorstroms auf Überschreiten eines zulässigen Maßes an Abweichung von einem Sollverlauf überwacht wird,

wobei eine Bremse des Elektromotors aktiviert ist, insbesondere eingefallen bleibt.

Von Vorteil ist dabei, dass die Sicherheit erhöht ist, weil schon bei der Vormagnetisierung, also bei noch geschlossener Bremse **und noch nicht vollständig aufmagnetisiertem Rotor,** der Motor prüfbar ist. Wenn der Motorstrom eine zu starke Abweichung von dem vorgegebenen Verlauf aufweist, liegt ein Fehler vor. Beispielsweise ist ein Kabelbruch, insbesondere also eine aufgetrennte elektrische Leitung, oder ein fehlender Anschluss oder ein fehlender elektrischer Kontakt vorhanden. Es kann aber auch ein Verdrahtungsfehler vorliegen, wie beispielsweise eine fehlerhafte Verschaltung des Drehstrommotors. Beispielsweise ist eine Sternschaltung anstatt einer Dreieckschaltung ausgeführt worden. Somit würde dann der Elektromotor im aktiven Betrieb nicht das gewünschte Drehmoment aufbauen.

Liegt ein solcher Fehler vor, bleibt die Bremse eingefallen. Die Bremse wird dann also nicht gelüftet zur Herstellung des aktiven Betriebs. Ebenso wird auch der aktive Betrieb, also ein drehzahlgeregelter oder Drehmoment-geregelter Betrieb des Elektromotors nicht ausgeführt.

Somit ist schon gleich bei der Erstinbetriebnahme die Sicherheit erhöht.

**Da während des ersten Verfahrensschrittes, also während des Vormagnetisierens, der Motorstromverlauf überwacht wird, ist die Prüfung, insbesondere Überwachung, des Motors in einer sehr kurzen Zeit ermöglicht. Es muss also nicht auf das Erreichen der stationären Motorstromwerte gewartet werden.**

Bei einer vorteilhaften Ausgestaltung wird in einem auf den ersten zeitlich nachfolgenden zweiten Verfahrensschritt
- eine Bremse des Elektromotors gelüftet, wenn während des ersten Verfahrensschrittes kein Überschreiten detektiert worden war, und danach der aktive Betrieb, insbesondere der geregelte Betrieb, des Elektromotors ausgeführt wird,
- und die Bremse des Elektromotors bleibt eingefallen, wenn während des ersten Verfahrensschrittes ein Überschreiten detektiert worden war, und danach kein aktiver Betrieb, insbesondere der geregelte Betrieb, des Elektromotors ausgeführt wird.
Von Vorteil ist dabei, dass bei zulässigem Stromverlauf kein Fehler vorhanden ist und somit nach der Vormagnetisierung die Bremse geöffnet wird und der aktive Betrieb begonnen wird.

Bei einer vorteilhaften Ausgestaltung wird das Überwachen auf Überschreiten des zulässigen Maßes an Abweichung ausgeführt, indem der Verlauf der Werte des erfassten Motorstroms auf Überschreiten des zeitabhängigen Sollverlaufs eines oberen Schwellwertes überwacht wird und auf Unterschreiten des zeitabhängigen Sollverlaufs eines unteren Schwellwertes. Von Vorteil ist dabei, dass der zu einem jeweiligen Zeitpunkt erfasste Messwert des Motorstroms nur verglichen werden muss mit dem für diesen jeweiligen Zeitpunkt zugeordneten oberen Schwellwert und mit dem für diesen jeweiligen Zeitpunkt zugeordneten unteren Schwellwert. Somit ist durch einfaches Vergleichen die Überwachung ausführbar und die Sicherheit erhöht.

Bei einer vorteilhaften Ausgestaltung ist der Stator des Elektromotors von einem Wechselrichter mit einer Drehspannung speisbar und der Rotor weist einen Kurzschlusskäfig auf. Von Vorteil ist dabei, dass ein von einem Wechselrichter gespeister Asynchronmotor verwendbar ist.

Bei einer vorteilhaften Ausgestaltung steigt
- in einem ersten Zeitabschnitt des ersten Verfahrensschritts der Sollverlauf linear mit der Zeit an,
- in einem auf den ersten Zeitabschnitt zeitlich nachfolgenden zweiten Zeitabschnitt des ersten Verfahrensschritts weist der Sollverlauf konstante Werte auf und
- in einem auf den zweiten Zeitabschnitt zeitlich nachfolgenden dritten Zeitabschnitt des ersten Verfahrensschritts fällt der Sollverlauf linear mit der Zeit ab bis zu einem nichtverschwindenden Wert.
Von Vorteil ist dabei, dass ein vorgegebener Sollverlauf eingehalten wird. Insbesondere wird ein lokales Maximum an Motorstrom erreicht und somit eine möglichst schnelle Vormagnetisierung. Daher muss nach dem Überschreiten des lokalen Maximums der Motorstrom wieder abgesenkt werden. Selbst wenn also Verluste kurzfristig erhöht sind, ist eine schnelle Vormagnetisierung ausführbar. Durch die linearen Abschnitte der Sollverläufe ist eine besonders einfache Überwachung ausführbar.

Bei einer vorteilhaften Ausgestaltung ist die Zeitdauer des zweiten Zeitabschnitts kürzer als die Summe aus der Zeitdauer des ersten Zeitabschnitts und der Zeitdauer des dritten Zeitabschnitts. Von Vorteil ist dabei, dass der Anstieg im ersten Zeitabschnitt sehr schnell ausführbar ist, insbesondere der Stromanstieg nur durch Statorinduktivität begrenzt ist und ebenso das abfallen des Motorstromes im dritten Zeitabschnitt schnell ausführbar ist, da ein nicht verschwindender Wert an Motorstrom erreicht werden muss. Somit ist mit dem konstanten Wert ein hoher Wert anwendbar, der nahe an einer zulässige Stromgrenze angeordnet ist und somit zu einer schnellen Vormagnetisierung führt. Wichtig ist dabei, dass der Motorstrom im zweiten Zeitabschnitt zwar einen konstanten Wert aufweist, also der Betrag des aus den Phasenströmen des Elektromotors gebildete Motorstromraumzeigers konstant ist, aber die Richtung des Motorstromraumzeigers nicht unbedingt konstant sein muss. Denn durch Verändern der Richtung des Motorstromraumzeigers bei gleichzeitig verschwindend geringer Drehmomenterzeugung ist ein besonders schnelles Vormagnetisieren ermöglicht und ein bei oder nach Lüften der Bremse sanftes Zuschalten des Motors an die angetriebene Seiltrommel ermöglicht.

Bei einer vorteilhaften Ausgestaltung nimmt die Differenz zwischen oberem und unterem Schwellwert im ersten Zeitabschnitt des ersten Verfahrensschritts monoton zu und weist im zweiten und dritten Zeitabschnitt des ersten Verfahrensschritts einen konstanten Wert auf. Von Vorteil ist dabei, dass abhängig von einer zu Beginn der Vormagnetisierung etwaig noch vorhandener Restmagnetisierung der Aufbau des Motorstroms mit einer höheren Abweichung toleriert wird, also unterschiedliche Anfangsbedingungen berücksichtigt sind, und nach Erreichen des während der Vormagnetisierung vorgesehenen maximalen Stroms die Anfangsbedingungen unerheblich werden.

Bei einer vorteilhaften Ausgestaltung wird bei Überschreiten des zulässigen Maßes ein Fehler angezeigt und/oder weitergemeldet. Von Vorteil ist dabei, dass der Fehlerzustand erkennbar ist und eine Wartungsmaßnahme oder dergleichen einleitbar ist.

Bei einer vorteilhaften Ausgestaltung wird im aktiven Betrieb vom Elektromotor ein nichtverschwindendes Drehmoment erzeugt, insbesondere das vom Motor erzeugte Drehmoment auf einen Sollwert hingeregelt wird. Von Vorteil ist dabei, dass nach ausgeführter Vormagnetisierung ein Rotorfluss vorhanden ist, welcher bei zu ihm nicht parallel ausgerichtetem Motorstromraumzeiger ein entsprechendes Drehmoment erzeugbar macht. Somit ist für den aktiven Betrieb ein großes Drehmoment unmittelbar zur Verfügung stellbar.

Wichtige Merkmale bei **einem** Hubwerk zur Durchführung eines vorgenannten Verfahrens sind, dass das Hubwerk eine von einem von einem Wechselrichter gespeisten Elektromotor bewegbare, insbesondere hebbaren, Last aufweist,

insbesondere wobei der Elektromotor eine Seiltrommel antreibt, auf der ein Seil zumindest teilweise aufgewickelt ist, an welchem. die Last befestigt ist,
wobei der Elektromotor als Asynchronmotor ausgeführt ist,
wobei das Hubwerk ein Mittel zur Erfassung des Motorstroms aufweist,
wobei der Elektromotor eine Bremse, insbesondere eine elektromagnetisch betätigbare Bremse, insbesondere Haltebremse, aufweist, insbesondere wobei das von der Bremse erzeugte Bremsmoment dem Rotor des Elektromotors zugeleitet wird,
wobei das Hubwerk, insbesondere der Wechselrichter, ein Mittel zur Überwachung des erfassten Stromes auf Überschreiten eines zulässigen Maßes an Abweichung von einem Sollwert, insbesondere Sollwertverlauf, aufweist,
wobei das Mittel mit einem Anzeigemittel zur Anzeige eines Fehlers signaltechnisch verbunden ist. Von Vorteil ist dabei, dass ein herunterfallen der Last vermeidbar ist, weil die Bremse erst geöffnet wird, nur wenn die Vormagnetisierung sicher bereitgestellt ist.

Bei einer vorteilhaften Ausgestaltung ist zwischen Seiltrommel und Elektromotor ein Getriebe zwischengeordnet. Von Vorteil ist dabei, dass die Last an einem Seil angehängt vorsehbar ist, welches an der Seiltrommel aufwickelbar ist, welche von der abtreibenden Welle des Getriebes antreibbar ist, weil die Seiltrommel drehfest mit der abtreibenden Welle verbunden ist, und wobei die antreibende Welle des Getriebes von dem Rotor, insbesondere von der Rotorwelle des Elektromotors antreibbar ist, insbesondere, weil die eintreibende Welle drehfest mit dem Rotor verbindbar ist.

Weitere Vorteile ergeben sich aus den Unteransprüchen.

Die Erfindung wird nun anhand von schematischen Abbildungen näher erläutert:
In der Figur 1 ist ein Verlauf eines Motorstroms eines Elektromotors gezeigt, wobei der Stromverlauf ein zulässiges Maß an Abweichung von einem vorgegebenen Verlauf nicht überschreitet, also kein Fehlerzustand erreicht wird.
In der Figur 2 ist ein Verlauf des Motorstroms des Elektromotors gezeigt, wobei der Stromverlauf ein zulässiges Maß an Abweichung von einem vorgegebenen Verlauf überschreitet, also ein Fehlerzustand erreicht wird.

Wie in den Figuren dargestellt, wird beim Einschalten eines Elektromotors, also nach dem Zeitabschnitt 1 des Nicht-Bestromens des als Asynchronmotor ausgeführten Elektromotors der Kurzschlusskäfig des Rotors des Elektromotors zunächst vormagnetisiert.

Dabei speist ein Wechselrichter mit einer derartigen Wechselspannung, dass ein im Kurzschlusskäfig ein Strom fließt, welcher ein Magnetfeld erzeugt.

Infolge der Induktivitäten insbesondere der Statorwicklung dauert der Aufbau eines Magnetfeldes mit der gewünschten Stärke abhängig vom Elektromotor zwischen einer Millisekunde und zehn Sekunden.

Der Motor ist als Drehstrommotor ausgeführt, wobei der Wechselrichter dem Motor eine Drehspannung bereitstellt.

Bei einem erfindungsgemäßen Hubwerk ist der Rotor drehfest mit einer Seiltrommel verbunden, wobei eine Last am auf der Seiltrommel aufwickelbaren Seil befestigt ist.

Zum Heben der Last muss das vom Elektromotor erzeugte Drehmoment M ein Mindestmoment überschreiten, da ansonsten die Last herabfallen kann.

Die Erfassung des Motorstroms ist in einfacher Weise ermöglicht durch Shuntwiderstände, welche in den Zuleitungen vom Wechselrichter zum Stator des Elektromotors angeordnet werden oder alternativ durch einen Shuntwiderstand, welcher am gleichstromseitigen Anschluss des Wechselrichters angeordnet ist. Der Wechselrichter ist aus einem netzgespeisten Gleichrichter speisbar, dessen gleichspannungsseitiger Anschluss mit dem gleichspannungsseitigen Anschluss des Wechselrichters verbunden ist, insbesondere über den Shuntwiderstand.

Der Elektromotor weist eine elektromagnetisch betätigbare Bremse auf, welche als Haltebremse ausgeführt ist. Hierbei ist der Rotor mit einem außenverzahnten Teil drehfest verbunden oder weist selbst eine Außenverzahnung auf. Ein Bremsbelagträger ist mit seiner Innenverzahnung auf den die Außenverzahnung des Rotors oder des Teils aufgeschoben und somit drehfest aber axial verschiebbar angeordnet auf dem Rotor.

Eine bestrombare Spule ist drehfest mit dem Stator verbunden. Zwischen der Spule und dem Bremsbelagträger ist eine Ankerscheibe aus ferromagnetischem Stahl drehfest aber axial bewegbar mit dem Stator verbunden. Hierbei ist die axiale Bewegung durch Bolzen geführt, welche mit dem Stator, insbesondere Statorgehäuse, verbunden sind.

Eine am Magnetkörper der Spule abgestütztes Federelement drückt die Ankerscheibe auf den Bremsbelagträger, der wiederum gegen eine am Gehäuse des Motors ausgebildete Bremsfläche gedrückt wird, wenn die Spule nicht bestromt ist. Somit ist dann die Bremse eingefallen, was mit dem Wert 0 des Zustands B der Bremse in den Figuren dargestellt ist.

Wenn die Spule bestromt ist, wird die Ankerscheibe von der Spule angezogen entgegen der vom Federelement erzeugten Federkraft. Somit bekommt dann der Bremsbelagträger axiales Spiel und die Bremse ist gelüftet was mit dem Wert 1 des Zustands B der Bremse in den Figuren dargestellt ist.

Bis zur Beendigung der Vormagnetisierung 2 wird die Spule nicht bestromt.

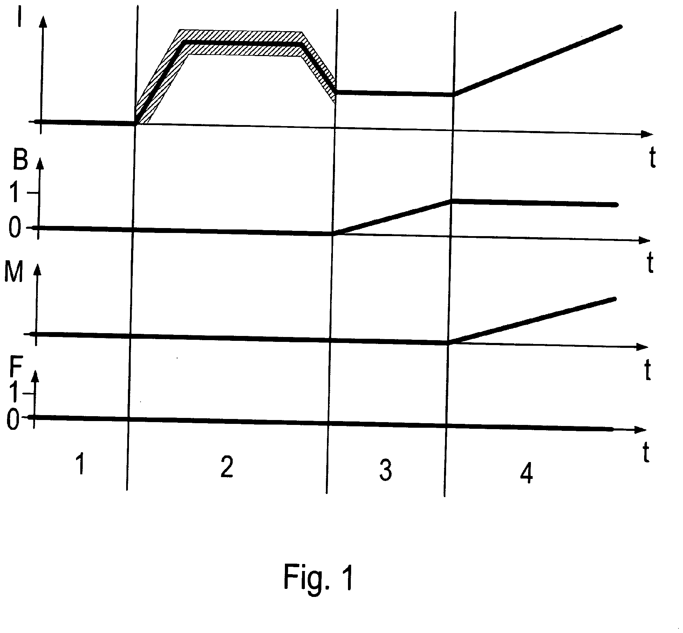

Wie in Figur 1 gezeigt, wird nach der Vormagnetisierung 2 die Spule bestromt, also die Bremse gelüftet. Dieses Lüften findet in einer Zeitspanne 3 statt, auf die dann der aktive Betrieb 4 des Motors erfolgt, also ein Drehmoment M aufgebaut wird. Somit ist dann die Last gegen ein Herabfallen gesichert, auch wenn die Bremse geöffnet ist.

Wenn jedoch ein Verdrahtungsfehler vorliegt oder ein Fehler beim Herstellen der Wicklungen des Motors oder ein sonstiger die Verkabelung betreffenden Fehler, wie Drahtbruch, Kurzschluss oder eine fehlerhafte Verschaltungsart, wie Sternschaltung statt Dreieckschaltung.

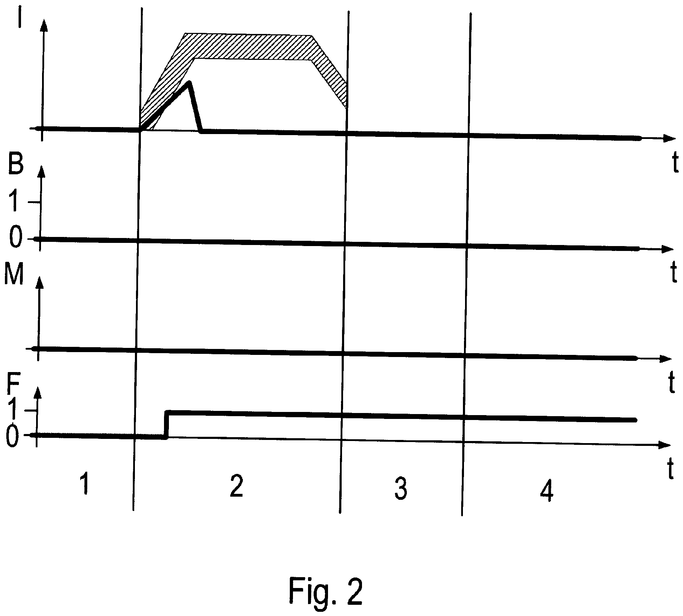

Wie in Figur 2 dargestellt, wird bei Detektion eines Fehlers, nämlich bei Überschreiten eines zulässigen Stromwertebereichs oder alternativ bei Unterschreiten des zulässigen Stromwertebereichs, ein Fehlerzustand ausgelöst, so dass dann das nachfolgend geplante Lüften der Bremse unterbunden wird und der aktive Betrieb nicht begonnen wird. In diesem Fall wird also die Last gehalten mittels der Bremse.

Der Stromwertebereich ist durch einen Verlauf des oberen Schwellwertes und einen Verlauf des unteren Schwellwertes vorgegeben, insbesondere im Zeitabschnitt der Vormagnetisierung 2.

Wie in den Figuren gezeigt, steigt der Verlauf des oberen Schwellwertes zunächst, also in einem ersten Zeitabschnitt, an, insbesondere als lineare Funktion der Zeit, also proportional zurzeit, und erreicht danach einen für einen weiteren Zeitabschnitt konstanten Wert, wonach er in einem dritten Zeitabschnitt als lineare Funktion der Zeit absinkt bis zu einem nicht verschwindenden Wert.

Wie in den Figuren gezeigt, steigt auch der Verlauf des unteren Schwellwertes zunächst, also in einem ersten Zeitabschnitt, an, insbesondere als lineare Funktion der Zeit, also proportional zurzeit, und erreicht danach einen für einen weiteren Zeitabschnitt konstanten Wert, wonach er in einem dritten Zeitabschnitt als lineare Funktion der Zeit absinkt bis zu einem nicht verschwindenden Wert. Der untere Schwellwert bleibt jedoch stets kleiner als der obere schwellwert und weist stets einen Mindestabstand zu ihm auf.

Bei weiteren erfindungsgemäßen Ausführungsbeispielen wird die Seiltrommel nicht direkt vom Rotor des Elektromotors, sondern über ein zwischengeordnetes Getriebe gedreht.

### Bezugszeichenliste

1 unbestromter Elektromotor
2 Vormagnetisierung
3 Öffnen der Bremse
4 aktiver Betrieb des Motors
I Motorstrom
B Bremsenzustand
M Drehmoment
F Fehlerzustand

## Patentansprüche

1. Verfahren zum Überwachen des Betriebs eines Elektromotors (1), insbesondere eines als Asynchronmotor ausgeführten Elektromotors (1),
wobei der Motorstrom erfasst wird,
wobei der Elektromotor (1) eine insbesondere elektromagnetisch betätigbare Bremse, insbesondere Haltebremse, aufweist, insbesondere wobei das von der Bremse erzeugte Bremsmoment dem Rotor des Elektromotors (1) zugeleitet wird,
**dadurch gekennzeichnet, dass**
in einem ersten Verfahrensschritt beim Einschalten des Elektromotors (1), insbesondere Anlegen einer Motorspannung, **der Verlauf der erfassten Werte des bei einem Vormagnetisieren bewirkten Motorstroms** auf Überschreiten eines zulässigen Maßes an Abweichung von einem **Sollwertverlauf** überwacht wird,
wobei **die** Bremse des Elektromotors (1) aktiviert ist, insbesondere eingefallen bleibt,
**wobei in einem auf den ersten zeitlich nachfolgenden zweiten Verfahrensschritt**
- **eine Bremse des Elektromotors (1) gelüftet wird, wenn während des ersten Verfahrensschrittes kein Überschreiten detektiert worden war, und danach der aktive Betrieb, insbesondere der geregelte Betrieb, des Elektromotors (1) ausgeführt wird,**
- **die Bremse des Elektromotors (1) eingefallen bleibt, wenn während des ersten Verfahrensschrittes ein Überschreiten detektiert worden war, und danach kein aktiver Betrieb, insbesondere der geregelte Betrieb, des Elektromotors (1) ausgeführt wird.**

2. Verfahren nach Anspruch 1,
**dadurch gekennzeichnet, dass**
das Überwachen auf Überschreiten des zulässigen Maßes an Abweichung ausgeführt wird, indem der Verlauf der Werte des erfassten Motorstroms auf Überschreiten des zeitabhängigen Sollverlaufs eines oberen Schwellwertes überwacht wird und auf Unterschreiten des zeitabhängigen Sollverlaufs eines unteren Schwellwertes.

3. Verfahren nach einem der vorangegangenen Ansprüche,
**dadurch gekennzeichnet, dass**
der Stator des Elektromotors (1) von einem Wechselrichter mit einer Drehspannung speisbar ist und der Rotor einen Kurzschlusskäfig aufweist.

4. Verfahren nach einem der vorangegangenen Ansprüche,
**dadurch gekennzeichnet, dass**
- in einem ersten Zeitabschnitt des ersten Verfahrensschritts der Sollverlauf linear mit der Zeit ansteigt,
- in einem auf den ersten Zeitabschnitt zeitlich nachfolgenden zweiten Zeitabschnitt des ersten Verfahrensschritts konstante Werte aufweist und
- in einem auf den zweiten Zeitabschnitt zeitlich nachfolgenden dritten Zeitabschnitt des ersten Verfahrensschritts linear mit der Zeit abfällt bis zu einem nichtverschwindenden Wert.

5. Verfahren nach einem der vorangegangenen Ansprüche,
**dadurch gekennzeichnet, dass**
die Differenz zwischen oberem und unterem Schwellwert im ersten Zeitabschnitt des ersten Verfahrensschritts monoton zunimmt und im zweiten und dritten Zeitabschnitt des ersten Verfahrensschritts konstant ist.

6. Verfahren nach einem der vorangegangenen Ansprüche,
**dadurch gekennzeichnet, dass**
die Zeitdauer des zweiten Zeitabschnitts kürzer ist als die Summe aus der Zeitdauer des ersten Zeitabschnitts und der Zeitdauer des dritten Zeitabschnitts.

7. Verfahren nach einem der vorangegangenen Ansprüche,
**dadurch gekennzeichnet, dass**
bei Überschreiten des zulässigen Maßes ein Fehler angezeigt und/oder weitergemeldet wird.

8. Verfahren nach einem der vorangegangenen Ansprüche,
**dadurch gekennzeichnet, dass**
im aktiven Betrieb vom Elektromotor (1) ein nichtverschwindendes Drehmoment erzeugt wird, insbesondere das vom Motor erzeugte Drehmoment auf einen Sollwert hingeregelt wird.

9. **Verfahren nach einem der vorangegangenen Ansprüche,**
**dadurch gekennzeichnet, dass**
**während des ersten Verfahrensschritts der Motor, insbesondere Rotor des Motors, noch nicht vollständig aufmagnetisiert ist.**

## Claims

1. Method for monitoring the operation of an electric motor (1), in particular of an electric motor (1) configured as an asynchronous motor,
wherein the motor current is detected,
wherein the electric motor (1) has a brake, in particular a holding brake, that can be actuated in particular electromagnetically, in particular wherein the braking torque generated by the brake is supplied to the rotor of the electric motor (1),
**characterised in that**
in a first method step, when the electric motor (1) is switched on, in particular when a motor voltage is applied, the curve of the detected values of the motor current induced during pre-magnetisation is monitored for overshooting a permitted degree of deviation from a setpoint curve,
wherein the brake of the electric motor (1) is activated, in particular remains applied,
wherein in a second method step chronologically following the first method step,
- a brake of the electric motor (1) is released if no overshooting has been detected during the first method step, and thereafter the active mode, in particular the automatic mode, of the electric motor (1) is implemented,
- the brake of the electric motor (1) remains applied if overshooting has been detected during the first method step, and thereafter the active mode, in particular the automatic mode, of the electric motor (1) is not implemented.

2. Method according to claim 1,
**characterised in that**
the overshooting of the permitted degree of deviation is monitored by monitoring the curve of the values of the detected motor current both for overshooting the time-dependent target curve of an upper threshold value and for undershooting the time-dependent target curve of a lower threshold value.

3. Method according to any of the preceding claims,
**characterised in that**
the stator of the electric motor (1) can be fed with a three-phase voltage by an inverter, and the rotor has a squirrel cage.

4. Method according to any of the preceding claims,
**characterised in that**
- in a first time interval of the first method step, the target curve rises linearly over time,
- in a second time interval of the first method step, chronologically following the first time interval, the target curve has constant values and
- in a third time interval of the first method step, chronologically following the second time interval, the target curve drops linearly over time down to a non-negligible value.

5. Method according to any of the preceding claims,
**characterised in that**
the difference between the upper and lower threshold values increases monotonically in the first time interval of the first method step and is constant in the second and third time intervals of the first method step.

6. Method according to any of the preceding claims,
**characterised in that**
the duration of the second time interval is shorter than the sum of the duration of the first time interval and the duration of the third time interval.

7. Method according to any of the preceding claims,
**characterised in that**
an error is displayed and/or relayed when the permitted degree is overshot.

8. Method according to any of the preceding claims,
**characterised in that**
when the electric motor (1) is in the active mode, a non-negligible torque is generated, and in particular the torque generated by the motor is controlled towards a setpoint.

9. Method according to any of the preceding claims,
**characterised in that**
the motor, in particular the rotor of the motor, is not yet fully magnetised during the first method step.

## Revendications

1. Procédé de surveillance du fonctionnement d'un moteur électrique (1), en particulier d'un moteur électrique (1) réalisé sous la forme d'un moteur asynchrone,
où le courant de moteur est détecté,
où le moteur électrique (1) présente un frein pouvant en particulier être actionné de manière électromagnétique, en particulier un frein de retenue, en particulier où le couple de freinage généré par le frein est transmis au rotor du moteur électrique (1),
**caractérisé en ce que**
dans une première étape de procédé, lors de la mise en marche du moteur électrique (1), en particulier lors de l'application d'une tension de moteur, la courbe des valeurs détectées du courant de moteur provoqué par une prémagnétisation est surveillé quant au dépassement d'une mesure admissible d'écart par rapport à une courbe nominale, où le frein du moteur électrique(1) est activé, en particulier reste en prise.
où, dans une deuxième étape de procédé succédant à la première étape,
- le frein du moteur électrique (1) est ventilé si aucun dépassement n'a été détecté au cours de la première étape de procédé, puis le fonctionnement actif, en particulier le fonctionnement régulé, du moteur électrique (1) est mis en oeuvre,
- le frein du moteur électrique (1) reste en prise si un dépassement a été détecté au cours de la première étape de procédé, et aucun fonctionnement actif, en particulier le fonctionnement régulé, du moteur électrique (1) n'est ensuite mis en oeuvre.

2. Procédé selon la revendication 1,
**caractérisé en ce que**
la surveillance du dépassement de la mesure admissible de l'écart est mise en oeuvre en surveillant la courbe des valeurs du courant de moteur détecté quant au dépassement de la courbe nominale dépendante du temps d'une valeur de seuil supérieure et quant au dépassement de la courbe nominale dépendante du temps d'une valeur de seuil inférieure.

3. Procédé selon l'une quelconque des revendications précédentes,
**caractérisé en ce que**
le stator du moteur électrique (1) peut être alimenté avec une tension de rotation par un onduleur et le rotor présente une cage de court-circuit.

4. Procédé selon l'une quelconque des revendications précédentes,
**caractérisé en ce que**
- dans une première phase de la première étape de procédé, la courbe nominale augmente de manière linéaire avec le temps,
- dans une deuxième phase de la première étape de procédé succédant temporellement à la première phase, ladite courbe présente des valeurs constantes et
- dans une troisième phase de la première étape de procédé succédant temporellement à la deuxième phase, ladite courbe diminue de manière linéaire avec le temps jusqu'à une valeur non décroissante.

5. Procédé selon l'une quelconque des revendications précédentes,
**caractérisé en ce que**
la différence entre les valeurs de seuil supérieure et inférieure augmente de manière monotone dans une première phase de la première étape de procédé et est constante dans les deuxième et troisième phases de la première étape de procédé.

6. Procédé selon l'une quelconque des revendications précédentes,
**caractérisé en ce que**
la durée de la deuxième phase est plus courte que la somme de la durée de la première phase et de la durée de la troisième phase.

7. Procédé selon l'une quelconque des revendications précédentes,
**caractérisé en ce que**
en cas de dépassement de la mesure acceptable, une erreur est affichée et/ou relayée.

8. Procédé selon l'une quelconque des revendications précédentes,
**caractérisé en ce que**
lors du fonctionnement actif, un couple non décroissant est généré par le moteur électrique (1), le couple généré par le moteur étant en particulier réglé sur une valeur nominale.

9. Procédé selon l'une quelconque des revendications précédentes,
**caractérisé en ce que**
au cours de la première étape de procédé, le moteur, en particulier le rotor du moteur, n'est pas encore complètement magnétisé.
